(19) Europäisches Patentamt
European Patent Office
Office européen des brevets

(11) **EP 4 408 014 A1**

(12) **DEMANDE DE BREVET EUROPEEN**

(43) Date de publication:
**31.07.2024 Bulletin 2024/31**

(21) Numéro de dépôt: **24153364.5**

(22) Date de dépôt: **23.01.2024**

(51) Classification Internationale des Brevets (IPC):
*H04N 25/77* (2023.01)    *H04N 25/76* (2023.01)
*H04N 25/60* (2023.01)    *H04N 25/618* (2023.01)
*H04N 25/771* (2023.01)    *H04N 25/772* (2023.01)
*H04N 25/65* (2023.01)    *H04N 25/30* (2023.01)
*H04N 25/78* (2023.01)

(52) Classification Coopérative des Brevets (CPC):
**H04N 25/30; H04N 25/60; H04N 25/618;
H04N 25/65; H04N 25/76; H04N 25/77;
H04N 25/771; H04N 25/772; H04N 25/78**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **27.01.2023 FR 2300800**

(71) Demandeur: **Trixell
38430 Moirans (FR)**

(72) Inventeur: **SIAUD, Martin
38430 MOIRANS (FR)**

(74) Mandataire: **Atout PI Laplace
Immeuble Up On
25 Boulevard Romain Rolland
CS 40072
75685 Paris Cedex 14 (FR)**

(54) **PROCEDE DE LECTURE ET DISPOSITIF DE LECTURE DE SIGNAUX ELECTRIQUES ISSUS D'UN CAPTEUR PHOTOSENSIBLE**

(57) L'invention concerne un procédé de lecture d'un capteur comprenant une matrice de pixels sensibles à un phénomène physique et délivrant un signal électrique dont le niveau est fonction de l'intensité du phénomène physique, les pixels étant organisés en rangées et étant reliés au travers de conducteurs à des circuits de lecture du capteur, les circuits de lecture comprenant chacun un convertisseur analogique numérique recevant le signal électrique et délivrant une information numérique fonction du signal électrique. Le procédé comprend les phases suivantes pour la lecture de chaque pixel :
- acquisition par la matrice de pixels de charges électriques ; et
- lecture de la matrice en transférant vers les circuits de lecture les charges acquises durant la phase d'acquisition,

dans lequel, durant la phase de lecture, plusieurs conversions analogique numérique successives des charges acquises sont réalisées en parallèle d'une même phase d'acquisition.

L'invention concerne aussi un dispositif de lecture comportant les circuits de lecture du capteur et configuré pour mettre en oeuvre le procédé de lecture.

FIGURE 3

EP 4 408 014 A1

**Description**

L'invention se rapporte au domaine des imageurs à semi-conducteurs pour la détection de rayons-X. Elle concerne en particulier un procédé de lecture d'un capteur photosensible.

Les capteurs photosensibles sont mis en oeuvre pour l'imagerie de rayonnements ionisants et notamment les rayonnements X pour la détection des images radiologiques dans le domaine médical ou celui du contrôle non destructif dans le domaine industriel ou celui de la sécurité.

De manière générale, le capteur photosensible comprend un grand nombre de points photosensibles appelés pixels généralement organisés en matrice ou en barrette. Dans un capteur photosensible, un pixel représente l'élément sensible élémentaire du capteur. Chaque pixel convertit le rayonnement électromagnétique auquel il est soumis en un signal électrique. Les signaux électriques issus des différents pixels sont collectés par des circuits de lecture lors d'une phase de lecture de la matrice puis numérisés de manière à pouvoir être traités et stockés pour former une image.

Les pixels comprennent une zone photosensible délivrant un courant de charges électriques en fonction du flux de photons qu'elle reçoit, et un circuit électronique. La zone photosensible comprend généralement un élément photosensible, ou photodétecteur, qui peut par exemple être une photodiode, une photorésistance ou un phototransistor. Le circuit électronique est constitué par exemple d'interrupteurs, de capacités, de résistances, en aval duquel est placé un actionneur. L'ensemble constitué par l'élément photosensible et le circuit électronique permet de générer des charges électriques et de les collecter. Le circuit électronique permet généralement la réinitialisation de la charge collectée dans chaque pixel après un transfert de charge. Le rôle de l'actionneur est de transférer ou de recopier les charges collectées par le circuit dans un conducteur de colonne. Ce transfert est réalisé lorsque l'actionneur en reçoit l'instruction d'un conducteur de ligne. La sortie de l'actionneur correspond à la sortie du pixel.

Dans ce type de capteur, un pixel fonctionne selon deux phases : une phase de prise d'image, durant laquelle le circuit électronique du pixel accumule les charges électriques générées par l'élément photosensible, et une phase de lecture, au cours de laquelle les charges collectées sont transférées ou recopiées dans le conducteur de colonne, grâce à l'actionneur.

Lors de la phase de lecture, une instruction de lecture est émise vers tous les actionneurs d'une même ligne de la matrice au moyen d'un conducteur de ligne. Chacun des pixels de cette ligne est lu en transférant son information électrique, charge, tension, courant, fréquence, etc., au conducteur de colonne auquel il est associé.

Pour une trame d'image, les lignes de pixels peuvent être sélectionnées en séquence, l'une après l'autre suivant un sens de balayage des lignes de la matrice, pendant un temps de sélection de ligne correspondant à une fraction de la durée de la trame, permettant l'application sur les pixels de la ligne considérée de signaux appropriés, par exemple des tensions. Ainsi la sélection d'une ligne correspond à l'application pendant un temps de sélection de ligne correspondant, d'un signal de niveau haut commandant l'état passant des dispositifs de commutation de la ligne de pixels correspondante. En dehors du temps de sélection de la ligne, les dispositifs de commutation sont maintenus à un état bloqué via l'application d'un signal de niveau bas approprié. Par exemple, lorsque les dispositifs de commutation sont des transistors, les signaux à appliquer étant alors des tensions, il est habituel de désigner par VGon la tension correspondant au niveau haut et partant à l'état passant du transistor de commutation, et par VGoff la tension correspondant au niveau bas et à l'état bloqué du transistor de commutation.

Les capteurs photosensibles sont souvent réalisés au moyen de techniques de dépôts en films minces de matériaux semi-conducteurs sur un substrat à base de verre ou de silicium. Les technologies pixel utilisées dans les imageurs grande surface sont historiquement le silicium amorphe pour leur coût de production faible comparé à des technologies en silicium cristallin connus dans la littérature anglosaxonne par leur abréviation CMOS pour "Complementary Métal Oxide Semiconductor ". En contrepartie, les possibilités techniques sont limitées. Seuls des pixels de type passif peuvent être réalisés (un seul transistor de transfert des charges).

Pour une matrice à pixel passif, le circuit de lecture comprend plusieurs étages, notamment un étage charge-tension convertissant les charges reçues par le photodétecteur en une tension, en amont d'un convertisseur analogique numérique.

Du bruit électronique est généré au niveau de la matrice de pixels ainsi qu'au niveau des différents étages de chaque circuit de lecture. Dans les applications à faible sensibilité, la source de bruit majoritaire est celle du convertisseur analogique-numérique, tandis que dans les applications à forte sensibilité, le bruit du convertisseur analogique-numérique est négligeable comparé au bruit en amont de la matrice de pixels et des différents étages du circuit de lecture (étage d'entrée et étage charge-tension).

Pour réduire le bruit dans les applications à forte sensibilité, différentes options existent dans l'art antérieur, telles que l'augmentation de la durée de prise d'image (aussi appelée durée d'acquisition ou durée d'intégration).

Pour être efficaces, les solutions de l'art antérieur nécessitent un allongement significatif de la durée nécessaire à la réalisation de l'image (correspondant au cumul de la durée d'intégration et la durée de lecture). Cela n'est pas compatible avec les fréquences d'images utilisées pour les applications courantes.

Une autre amélioration consiste à séparer en deux parties symétriques un substrat (souvent appelé dalle) portant les pixels. La séparation consiste à mettre des circuits de lecture de part et d'autre de la dalle. La longueur des colonnes est ainsi divisée par deux. La résistance de colonne est donc divisée par deux, réduisant significativement la source de bruit majeure du capteur passif. Cependant, cette solution nécessite de doubler le nombre de circuits de lecture et revient donc à un coût élevé.

L'invention vise à proposer un procédé de lecture d'un capteur photosensible, simple à mettre en oeuvre et économique, permettant de réduire le bruit sur les sources de bruits majoritaires à la fois au niveau du convertisseur analogique numérique ainsi qu'en amont dudit convertisseur, i.e. sur toute la chaîne d'acquisition.

L'invention propose à cet effet un procédé de lecture d'un capteur comprenant une matrice de pixels sensibles à un phénomène physique et délivrant un signal électrique dont le niveau est fonction de l'intensité du phénomène physique, les pixels étant organisés en rangées et étant reliés au travers de conducteurs à des circuits de lecture du capteur, les circuits de lectures comprenant chacun un convertisseur analogique numérique recevant le signal électrique et délivrant une information numérique fonction du signal électrique, dans lequel, le procédé comprend les phases suivantes pour la lecture de chaque pixel :

- acquisition par la matrice de pixel de charges électriques ;

- lecture de la matrice en transférant vers les circuits de lecture les charges acquises durant la phase d'acquisition ;

dans lequel, durant la phase de lecture, plusieurs conversions analogique numérique successives des charges acquises sont réalisées en parallèle d'une même phase d'acquisition.

La solution apportée par l'invention consiste ainsi à effectuer plusieurs conversions analogiques-numériques successives en parallèle de l'acquisition d'un signal. Les conversions sont réalisées sur la même phase d'acquisition du signal.

Autrement dit, l'acquisition du signal est conservée et ledit signal acquis est régulièrement converti. En d'autres termes encore, le signal est converti pendant et au fur et à mesure de son acquisition.

La réalisation de ces conversions multiples revient ainsi à réaliser des conversions sur plusieurs parties du signal acquis, et donc à réaliser en parallèle l'échantillonnage et la conversion analogique numérique du signal.

En réalisant N conversions, les conversions ont lieu sur des espaces de temps N fois plus petits. La variation de fréquence de coupure d'un étage d'entrée du circuit de lecture est donc N fois plus petite sur le signal converti. Or le bruit thermique colonne et le bruit de l'étage d'entrée dépendent de la fréquence de coupure de l'étage d'entrée. Le bruit thermique colonne et le bruit de l'étage d'entrée sont ainsi divisés par $\sqrt{N}$. Ces bruits étant les bruits majoritaires dans le capteur, le bruit total du capteur est ainsi quasiment réduit d'un facteur de $\sqrt{N}$.

Grâce à l'invention, le bruit du capteur est réduit sur les sources majoritaires sur toute la chaîne d'acquisition du signal, et non pas uniquement sur une partie de la chaîne d'acquisition (par exemple uniquement au niveau du convertisseur analogique numérique).

Des caractéristiques préférées particulières commodes du procédé de lecture selon l'invention sont présentées ci-dessous.

Les pixels sont de type passif.

Le signal électrique délivré par les pixels est une charge électrique. Les circuits de lecture comprennent chacun un étage charge-tension configuré pour convertir des charges électriques reçues des pixels en une tension, la tension étant délivrée au convertisseur analogique numérique.

Chaque circuit de lecture comprend un étage d'entrée comprenant un amplificateur et un transistor, l'amplificateur ayant une entrée inverseuse reliée à l'un des pixels et une sortie reliée à la grille du transistor.

L'amplificateur est configuré pour amplifier la différence de potentiel entre une tension d'une rangée de la matrice de pixels et une tension de référence d'entrée. L'amplificateur est également configuré pour contrôler le transistor par une tension de contrôle.

Le procédé comprend au moins une réinitialisation automatique de chaque circuit de lecture au moyen de l'étage d'entrée au cours de l'acquisition des charges électriques.

Chaque circuit de lecture comprend un échantillonneur-bloqueur piloté en mode passant durant toute la phase de lecture.

Le convertisseur analogique numérique est un convertisseur Sigma-Delta.

Les conversions sont réalisées à intervalle régulier durant la même phase d'acquisition. Autrement dit, les conversions analogique-numérique sont espacées par un même intervalle de temps. En d'autres termes encore, l'intervalle de temps séparant deux conversions successives est constant durant toute la phase de lecture.

Selon un autre aspect, l'invention concerne également un dispositif de lecture de signaux électriques issus de capteurs comprenant une matrice de pixels sensibles à un phénomène physique et configurée pour délivrer un signal électrique dont le niveau est fonction de l'intensité du phénomène physique, le dispositif de lecture comportant les circuits de lecture du capteur et configuré pour mettre en oeuvre le procédé de lecture présentant au moins l'une des caractéristiques précédentes. Les pixels sont organisés en rangées et étant reliés au travers de conducteurs aux circuits de lecture du dispositif de lecture, les circuits de lecture comprenant chacun un convertisseur analogique numérique recevant le signal électrique et délivrant une information numérique fonction du signal électrique.

Le convertisseur analogique numérique est un convertisseur Sigma-Delta.

D'autres particularités et avantages de l'invention apparaîtront encore dans la description ci-après en référence aux dessins annexés, donnés à titre d'exemple non limitatifs :

- la figure 1 représente schématiquement un exemple de matrice de pixels 1T connu de l'art antérieur ;

- la figure 2 représente schématiquement un ensemble comprenant un pixel et un dispositif de lecture d'un signal électrique issu du pixel selon un mode de réalisation de l'invention ; et

- la figure 3 est une représentation en chronogrammes illustrant un procédé de lecture selon un mode réalisation de l'invention.

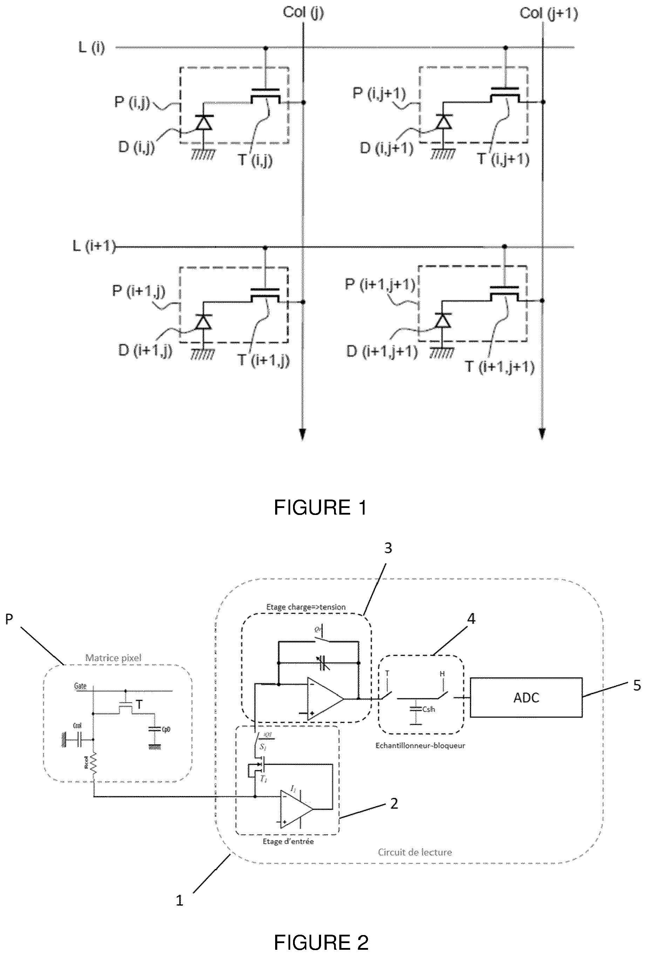

La figure 1 représente schématiquement une matrice connue de l'art l'antérieur. La matrice comprend deux lignes et deux colonnes pour simplifier la compréhension. Quatre pixels P sont formés, chacun à l'intersection d'une ligne et d'une colonne. Il est bien entendu que les matrices réelles sont généralement beaucoup plus grandes et possèdent un grand nombre de lignes et de colonnes. La matrice appartient à un détecteur matriciel permettant de réaliser des images numérisées.

Chaque pixel P comprend une zone photosensible, représentée ici par une photodiode D, et un circuit électronique de traitement formé, dans l'exemple de la figure 1, par un seul transistor T. Les références des composants D et T sont suivies de deux coordonnées précisant le rang de la ligne, respectivement i et i+1, et celui de la colonne respectivement j et j+1. Les lignes et les colonnes sont ordonnées dans l'ordre physique qu'elles occupent dans la matrice de pixels. Les pixels représentés sont aussi appelés pixel de type 1T car possédant chacun un transistor dont la fonction va être décrite plus loin.

Les pixels P d'une même colonne sont raccordés à un conducteur de colonne Col. Le conducteur de colonne Col permet le recueil d'informations provenant des pixels qui lui sont reliés.

Les pixels P d'une même ligne sont raccordés à un conducteur de ligne L véhiculant un signal VG permettant de commander chacune des lignes de pixels. Des circuits de commande, non représentés sur la figure 1, généralement des registres à décalage, générant les signaux de commande portés par le conducteur de ligne L lorsqu'il est mis en oeuvre, sont raccordés aux conducteurs de ligne correspondants.

Lors d'une phase de prise d'image, l'éclairement reçu par chacune des photodiodes D fait décroître le potentiel de sa cathode sur laquelle des charges s'accumulent en fonction de l'éclairement reçu. Cette phase de prise d'image est suivie d'une phase de lecture pendant laquelle le potentiel de la photodiode D est lu. Pour ce faire, on rend passant le transistor T, qui a donc un rôle d'interrupteur, grâce à une commande de sélection de ligne véhiculée par le conducteur L et appliquée à sa grille. Le transistor T est commandé par le signal de commande VG appliqué à sa grille. Les différentes lignes de pixels sont lues séquentiellement. Les conducteurs de colonne Col sont utilisés séquentiellement pour le recueil d'information provenant des pixels des différentes colonnes lorsque celui-ci est sélectionné. La phase de lecture vide les charges de la photodiode D et permet sa remise à zéro avant une nouvelle phase de prise d'image.

Les circuits de commande sont disposés en extrémité de ligne. Par ailleurs, des circuits de lecture sont disposés en extrémité de chacun des conducteurs de colonne Col.

L'appellation ligne et colonne est purement arbitraire et pourrait être inversée. En pratique, les circuits de commande peuvent être disposés sur un côté de la matrice et les circuits de lecture peuvent être disposés sur un côté de la matrice perpendiculaire au côté sur lequel sont situé les circuits de commande. Afin de simplifier le raccordement des différents circuits, il est également possible de disposer tous les circuits, de commande, et de lecture d'un même côté de la matrice. Une ligne ou une colonne peut également être désignée ici par le terme rangée.

Les circuits de lecture associés aux conducteurs de colonne Col permettent par exemple de numériser les signaux collectés sur les conducteurs de colonne. Les différents circuits de lecture peuvent comprendre un multiplexeur permettant d'assembler les signaux provenant de toute une ligne de pixels. Une fois que la lecture d'une ligne est réalisée par les circuits de lecture, il est possible de sélectionner une nouvelle ligne pour réitérer l'opération de lecture.

La figure 2 représente, de manière simplifiée et schématique, un dispositif de lecture de signaux électriques issus d'un capteur photosensible selon l'invention.

Le dispositif de lecture comprend plusieurs circuits de lecture 1. Chaque circuit de lecture est raccordé en extrémité de l'un des conducteurs de colonne de la matrice de pixels. Par souci de simplification et de clarté, le schéma représente un seul circuit de lecture 1 et un seul pixel P de la matrice de pixels.

Le pixel P, de type 1T, comprend un circuit électronique de traitement formé par le transistor T.

Le transistor T est commandé par un signal Gate.

Le pixel P comprend une zone photosensible délivrant un courant de charges électriques en fonction du flux de photons qu'elle reçoit. La zone photosensible comprend un photodétecteur comme exemple une photodiode, une photorésistance ou un phototransistor. La zone photosensible est configurée pour collecter les charges issues des photos et se comporte ainsi comme un condensateur. La zone photosensible est représentée ici par un condensateur CpD.

La résistance Rcol et le condensateur Ccol représentés dans le pixel correspondent à la résistance colonne et la capacité colonne parasites dues à la configuration et aux dimensions de la matrice de pixels. Le capteur photosensible présente en effet de grandes dimensions. La largeur et longueur du capteur photosensible peuvent dépasser les 400 mm tandis que l'épaisseur est petite.

Le pixel P fonctionne selon deux phases, une phase d'acquisition et une phase de lecture.

Durant la phase d'acquisition, le circuit électronique du pixel accumule les charges électriques générées par l'élément photosensible. Le transistor T est ouvert durant la phase d'acquisition.

Une fois la phase d'acquisition terminée, le transistor T est fermé. Les charges acquises sont transférées ou recopiées dans le conducteur de colonne vers le circuit de lecture 1. Cela correspond à la phase de lecture.

Le circuit de lecture 1 comporte ici un étage d'entrée 2, un étage charge-tension 3, un échantillonneur-bloqueur 4 et un convertisseur analogique numérique ADC 5.

L'étage d'entrée 2 est connecté au conducteur de colonne du pixel P. L'étage d'entrée 2 est un étage de pré-amplification des charges acquises par le pixel P.

L'étage d'entrée 2 comprend un amplificateur $I_l$, un transistor $T_l$ et un interrupteur $Q_l$.

L'amplificateur $I_l$ est un amplificateur opérationnel. L'entrée inverseuse de l'amplificateur $I_l$ est reliée au pixel P, notamment au conducteur colonne.

Le transistor $T_l$ est un transistor à effet de champ à grille isolée, plus couramment appelé MOSFET (acronyme anglais de *Métal Oxide Semiconductor Field Effect Transistor).* La grille du transistor $T_l$ est reliée à la sortie de l'amplificateur $I_l$. La source du transistor $T_l$ est reliée à l'entrée inverseuse de l'amplificateur $I_l$. Le drain du transistor est relié à l'interrupteur $Q_l$.

L'interrupteur $Q_l$ est fermé en phase d'intégration des charges électriques. Les charges peuvent alors transiter de l'étage d'entrée 2 à l'étage charge-tension 3. L'interrupteur $Q_l$ est ouvert en dehors de l'intégration des charges électriques. Les charges électriques ne peuvent pas transiter jusqu'à l'étage charge-tension 3. L'interrupteur $Q_l$ est commandé par un signal externe, notamment un signal logique. Le signal externe permet d'ouvrir ou fermer l'interrupteur $Q_l$.

Le transistor $T_l$ peut être dans un état passant ou un état bloqué. Le transistor $T_l$ est passant dès lors que la tension qui lui est appliquée est au moins égale à une tension seuil $V_{th\_Tl}$. Autrement dit, la tension seuil $V_{th\_Tl}$ correspond au seuil de basculement, pour passer d'un état à l'autre parmi l'état passant et l'état bloqué.

L'amplificateur $I_l$ amplifie la différence de potentiel *Vin* entre la tension de la colonne *Vcol* et une tension de référence d'entrée *AGND.* La tension de référence d'entrée est ici la masse. L'amplificateur $I_l$ contrôle le transistor $T_l$, dit transistor de transfert, par une tension de contrôle Vctrl.

L'amplificateur $I_l$ se comporte comme un amplificateur inverseur fort gain. La tension $V_{ctrl}$ est inversement proportionnelle à la différence de tension *Vin = Vcol - AGND = Vcol* . Autrement dit, la tension de contrôle Vctrl est inversement proportionnelle à la tension d'entrée de l'amplificateur $I_l$.

L'étage charge-tension 3 comprend un amplificateur $I_r$, un condensateur $C_r$ et un interrupteur $Q_r$ montés en parallèles.

L'amplificateur $I_r$ est un amplificateur opérationnel. L'entrée inverseuse de l'amplificateur $I_r$ est reliée à l'interrupteur $Q_l$ de l'étage d'entrée 2. La sortie de l'amplificateur $I_r$ est reliée à l'échantillonneur-bloqueur 4.

Le condensateur $C_r$ est dans la contre-réaction de l'amplificateur $I_r$. Le condensateur $C_r$ est un condensateur variable. Le condensateur variable permet d'avoir un gain charge-tension programmable.

L'étage charge-tension 3 permet de transformer les charges acquises du pixel P en une tension. La tension obtenue est transmise à l'échantillonneur-bloqueur 4.

L'échantillonneur-bloqueur 4 comprend deux interrupteurs T et H, ainsi qu'un condensateur Csh.

L'échantillonneur-bloqueur 4 constitue l'entrée du convertisseur analogique numérique. L'échantillonneur-bloqueur 4 permet classiquement de prélever la tension reçue de l'étage charge-tension 3 à chaque instant d'échantillonnage, et de maintenir en outre le dernier échantillon à une valeur constante. Pour cela, les interrupteurs T et H sont ouverts et fermés alternativement.

Lors d'un fonctionnement classique de l'échantillonneur-bloqueur 4, lorsque l'interrupteur T est ouvert et l'interrupteur H est fermé, le condensateur Csh accumule la tension. Lorsque l'interrupteur T est fermé et l'interrupteur H est ouvert, le condensateur Csh libère la tension vers le convertisseur analogique numérique. L'échantillonneur-bloquer 4 permet ainsi de maintenir la tension en entrée du convertisseur analogique numérique 5 afin que ce dernier ait un temps suffisant pour traiter la tension et la convertir. La tension analogique est donc stable pendant toute la durée de la conversion en numérique.

De préférence, le convertisseur analogique numérique 5 est un convertisseur Sigma-Delta. Alternativement, le convertisseur analogique numérique 5 est un convertisseur à approximations successives (SAR pour *successive approximation register* en langue anglaise).

Le circuit de lecture 1 peut fonctionner selon deux modes : un mode d'échantillonnage-conversion et un mode nominal. Dans le mode d'échantillonnage-conversion, des conversions multiples du signal sont réalisées en parallèle de l'acquisition des charges électriques comme expliqué ci-après.

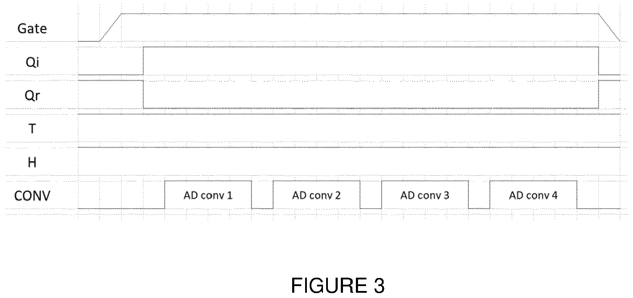

La figure 3 représente les chronogrammes des composants du circuit de lecture 1 lorsque le pixel P est dans la phase de lecture. Le circuit de lecture 1 est ici dans le mode d'échantillonnage-conversion.

Durant la phase de lecture, la grille (*gate*) du transistor T du pixel P est au niveau 1. Le transistor T est passant. Cela est permis par une commande de sélection de ligne véhiculée par le conducteur L et appliquée à la grille.

Les charges électriques acquises durant la phase d'acquisition sont alors envoyées vers le circuit de lecture 1.

Lorsque les charges électriques sont transmises du pixel P vers la colonne, la tension de la colonne *Vcol* et donc la tension *Vin* augmente. La tension de contrôle Vctrl descend proportionnellement à la tension de la colonne *Vcol.* L'amplificateur I$_l$ est passant tant que la tension de contrôle Vctrl est supérieure à la tension seuil $V_{th\_Tl}$. Les charges électriques sont transférées vers l'étage charge-tension 3, si l'interrupteur Q$_l$ est fermé. Au fur et à mesure que les charges électriques sont transférées de la colonne vers l'étage d'entrée 2, le transistor T$_l$ devient de moins en moins passant.

Lorsque les charges électriques sont transmises du pixel P vers la colonne, la tension de la colonne *Vcol* augmente jusqu'à arriver à la tension de référence *AGND,* ici la masse donc de 0V. Lorsque la tension de la colonne *Vcol* dépasse la tension de référence *AGND* nulle, la tension de contrôle devient alors négative. La tension de contrôle Vctrl est inférieure à la tension seuil $V_{th\_Tl}$. transistor T$_l$ est dans l'état bloqué. Les charges électriques ne transitent pas vers l'étage charge-tension 3. La colonne revient ainsi à son potentiel d'équilibre.

L'étage d'entrée 2 ainsi configuré permet de réaliser une réinitialisation (ou *reset*) automatique du circuit de lecture. La réinitialisation automatique est réalisée en même temps que l'acquisition des charges électriques. L'étage d'entrée 2 permet un contrôle dynamique de la tension d'entrée du circuit de lecture 1.

Dans le circuit de lecture, l'interrupteur Q$_l$ de l'étage d'entrée 2 est fermé. Les charges acquises sont transmises à l'étage charge tension 3 pour la transformation des charges en tension.

L'interrupteur Q$_r$ de l'étage charge tension est ouvert durant la phase de lecture. La remise à zéro n'est donc pas effectuée durant la phase de lecture. La tension est envoyée en entrée de l'échantillonneur-bloqueur 4.

Durant toute la phase de lecture, les deux interrupteurs T et H sont fermés. L'échantillonneur-bloqueur 4 est donc piloté en mode passant. Autrement dit, dans le mode d'échantillonnage-conversion, l'échantillonneur-bloqueur 4 correspond à un fil reliant l'étage charge-tension 3 au convertisseur analogique numérique 5. La tension est donc envoyée de l'étage charge tension 3 vers le convertisseur analogique numérique 5 sans traitement de l'échantillonneur-bloqueur 4. Le signal en tension proportionnel à la quantité de charges acquises est appliqué en entrée du convertisseur numérique analogique en temps réel.

Le convertisseur analogique numérique 5 réalise plusieurs conversions successives, ici par exemple quatre. Les conversions successives sont effectuées simultanément à l'acquisition ou intégration des charges.

Comme visible sur la figure 3, un délai entre l'activation de l'intégration (l'interrupteur Q$_l$ est ouvert au début et fermé uniquement au bout d'un laps de temps) et la première conversion est appliqué. Cela permet de garantir un temps d'établissement du signal en tension suffisant et ainsi minimiser des erreurs de conversion.

À chaque conversion, le signal en tension est quasi constant (aux fuites près). Le convertisseur analogique numérique 5 est avantageusement du type Sigma-Delta, ce qui lui permet de filtrer de légères variations du signal en tension.

L'interrupteur Q$_r$ est maintenu ouvert durant toute la phase de lecture. Le signal entre chaque conversion est ainsi conservé. La remise à zéro est effectuée, en fermant l'interrupteur Q$_r$, entre chaque intégration de charges.

Un traitement numérique peut être effectué à la fin de la phase de lecture en réalisant la moyenne des N conversions en aval du convertisseur analogique numérique 5. Ainsi, le signal numérisé en sortie est constant.

Le bruit électronique d'un détecteur numérique à matrice pixel passif est issu de plusieurs sources, dans la matrice à pixels mais également dans le circuit de lecture. Deux bruits principaux sont le bruit thermique colonne et le bruit de l'étage d'entrée.

Le bruit de l'étage d'entrée du circuit de lecture dépend de la fréquence de coupure Δf de l'étage d'entrée du circuit de lecture. La fréquence de coupure qui varie temporellement avec l'intégration des charges.

La bande passante de l'étage d'entrée 2 dépend de la bande passante du transistor T$_l$. La bande passante de l'étage d'entrée 2 est environ égale à

$$\frac{1}{4R_{in_{mpx}}C_{col}}$$

, où $R_{in_{mpx}}$ est la résistance du transistor T$_l$, et $C_{col}$ correspond à la somme de la capacité parasite de l'étage d'entrée et de la capacité colonne parasite due à la configuration et aux dimensions de la matrice de pixels. La résistance du transistor T$_l$, $R_{in_{mpx}}$, est dépendante de la tension de contrôle Vctrl du transistor T$_l$. Autrement dit, la résistance du transistor T$_l$, $R_{in_{mpx}}$, dépend des charges électriques arrivant en entrée.

Lorsque le transistor T$_l$ conduit en inversion faible, la résistance du transistor T$_l$, $R_{in_{mpx}}$, est proportionnelle à $1/\exp\left(\frac{Vgs}{nVt}\right)$ , où n>1 (généralement compris entre 1,2 et 1,7, par exemple égal à 1,5), et Vgs la différence de potentiel entre la Grille et la Source. Vt est égal

$$\frac{kT}{q}$$

à $\frac{kT}{q}$ , où k la constante de Boltzmann qui vaut k = 1,3806 × 10$^{-23}$ J.K$^{-1}$, et T la température absolue et q la valeur absolue de la charge de l'électron (1,602×10$^{-19}$ C). La résistance du transistor T$_I$, $R_{inmpx}$, est donc ici proportion-

$$\frac{1}{\exp(\frac{Vctrl}{nVt})}$$

nelle à $\frac{1}{\exp(\frac{Vctrl}{nVt})}$ ,. La bande passante de l'étage d'entrée 2 est dynamique et dépend temporellement de l'afflux des charges électriques.

Un modèle simplifié du bruit thermique colonne (en charge), également nommé bruit de résistance ou bruit Johnson est le suivant :

$$\sigma_{col} = \sqrt{4kTR_{col}\Delta_f} . C_{par}$$ , où $\sigma_{coil}$ est l'écart-type de la tension aux bornes de la résistance de la colonne, k la constante de Boltzmann qui vaut k = 1,3806 × 10$^{-23}$ J.K$^{-1}$, et T la température absolue de la résistance de la colonne.

Le bruit thermique de la colonne est dépendant de la fréquence de coupure Δf de l'étage d'entrée du circuit de lecture. Le bruit thermique de la colonne varie donc également temporellement avec l'intégration des charges électriques.

Autrement dit, le bruit thermique de la colonne dépend de la bande passante de l'étage d'entrée. Plus la résistance du transistor T$_I$, $R_{inmpx}$, est élevée, plus la bande passante de l'étage d'entrée est faible et donc plus le bruit de colonne est faible.

La bande passante de l'étage d'entrée 2 varie temporellement en fonction du temps d'intégration. Le bruit de l'étage d'entrée dépend donc du temps d'intégration. Il en résulte que le bruit de la colonne est dépendant du temps d'intégration. Au fur et à mesure que les charges électriques sont intégrées, les charges résiduelles baissent. La bande passante devient alors de plus en plus faible, et ainsi le bruit thermique de la colonne devient de plus en plus faible.

Dans le mode nominal du circuit de lecture 1, l'échantillonneur-bloqueur 4 fonctionne selon un fonctionnement classique. Autrement dit, les interrupteurs T et H sont ouverts et fermés alternativement. Lorsque l'interrupteur T est ouvert et l'interrupteur H est fermé, le condensateur Csh accumule la tension. Lorsque l'interrupteur T est fermé et l'interrupteur H est ouvert, le condensateur Csh libère la tension vers le convertisseur analogique numérique.

La présence de l'échantillonneur-bloqueur 4 dans le circuit de lecture 1 permet de faire fonctionner le circuit de lecture 1 selon les deux modes : le mode d'échantillonnage-conversion et le mode nominal. Le mode d'échantillonnage-conversion dans lequel l'échantillonneur-bloqueur 4 est transparent, est utilisé lorsque l'on souhaite paralléliser l'intégration des charges électriques et la conversion analogique-numérique.

Grâce à l'échantillonneur-bloqueur 4, il est possible de proposer différents modes d'utilisation selon l'application visée. Pour certaines applications, il existe le besoin d'avoir une fréquence d'acquisition des images très importante mais non nécessairement un bruit bas. A l'inverse, pour d'autres applications, il existe le besoin d'avoir un bruit bas mais non nécessairement une fréquence d'acquisition des images très importante. L'échantillonneur-bloqueur permet ainsi de proposer des modes rapides avec plus de bruit et des modes plus lents avec moins de bruit.

Contrairement à l'art antérieur dans lequel il est effectué un échantillonnage-blocage suivi ensuite par plusieurs conversions, l'invention permet de convertir en parallèle de l'intégration des charges électriques. Le signal est converti avec un niveau de bruit différent à chaque conversion. Cela est rendu possible par le fait que le signal est quasiment établi sur les différents échantillons et que le signal total est obtenu en le moyennant. En moyennant les bruits de la colonne et de l'étage-d'entrée, le bruit global est réduit.

Grâce à l'invention et notamment aux conversions multiples pendant une même phase d'acquisition, le signal en sortie est constant avec un bruit de lecture réduit d'un facteur de $\sqrt{N}$ . Autrement dit, le bruit thermique colonne et le bruit de l'étage d'entrée sont divisés par $\sqrt{N}$ . Ces bruits étant les bruits majoritaires dans le capteur, le bruit total du capteur est ainsi quasiment réduit d'un facteur de $\sqrt{N}$ .

Le procédé de lecture et le dispositif de lecture de signaux électriques issus de capteurs photosensibles selon l'invention permettent en effectuant des conversions multiples et simultanées à l'acquisition du signal de réduire de manière significative le bruit dans le capteur sur toute la chaîne d'acquisition du signal.

Les différences de signal intégré sont ailleurs minimes. En outre, grâce à un convertisseur sigma-delta, le signal est filtré rendant ainsi les légères variations du signal sans impact.

L'invention est particulièrement adaptée aux imageurs passifs 1T.

**Revendications**

1. Procédé de lecture d'un capteur comprenant une matrice de pixels (P) sensibles à un phénomène physique et délivrant un signal électrique dont le niveau est fonction de l'intensité du phénomène physique, les pixels étant organisés en rangées et étant reliés au travers de conducteurs (Col) à des circuits de lecture (1) du capteur, les circuits de lecture (1) comprenant chacun un convertisseur analogique numérique (5) recevant le signal électrique et délivrant une information numérique fonction du signal électrique, dans lequel, le procédé comprend les phases suivantes pour la lecture de chaque pixel :

- acquisition par la matrice de pixels de charges électriques ;
- lecture de la matrice en transférant vers les circuits de lecture les charges acquises durant la phase d'acquisition ;

dans lequel, durant la phase de lecture, plusieurs conversions analogique numérique successives des charges acquises sont réalisées en parallèle d'une même phase d'acquisition.

2. Procédé de lecture selon la revendication 1, dans lequel les pixels sont de type passif.

3. Procédé de lecture selon la revendication 1 ou la revendication 2, dans lequel le signal électrique délivré par les pixels est une charge électrique et dans lequel les circuits de lecture comprennent chacun un étage charge-tension (3) configuré pour convertir des charges électriques reçues des pixels en une tension, la tension étant délivrée au convertisseur analogique numérique (5).

4. Procédé de lecture selon l'une des revendications 1 à 3, dans lequel chaque circuit de lecture comprend un étage d'entrée (2) comprenant un amplificateur ($I_l$) et un transistor ($T_l$), l'amplificateur ($I_l$) ayant une entrée inverseuse reliée à l'un des pixels (P) et une sortie reliée à la grille du transistor ($T_l$), l'amplificateur ($I_l$) étant configuré pour amplifier la différence de potentiel entre une tension d'une rangée (*Vcol*) de la matrice de pixels et une tension de référence d'entrée (AGND), et pour contrôler le transistor ($T_l$) par une tension de contrôle ($V_{crtl}$).

5. Procédé de lecture selon la revendication 4, comprenant au moins une réinitialisation automatique de chaque circuit de lecture (1) au moyen de l'étage d'entrée (2) au cours de l'acquisition des charges électriques.

6. Procédé de lecture selon l'une des revendications 1 à 5, dans lequel chaque circuit de lecture comprend un échantillonneur-bloqueur (4) piloté en mode passant durant toute la phase de lecture.

7. Procédé de lecture selon l'une des revendications 1 à 6, dans lequel le convertisseur analogique numérique (5) est un convertisseur Sigma-Delta.

8. Procédé de lecture selon l'une des revendications 1 à 7, dans lequel les conversions sont réalisées à intervalle régulier durant la même phase d'acquisition.

9. Dispositif de lecture de signaux électriques issus de capteurs comprenant une matrice de pixels (P) sensibles à un phénomène physique et configurée pour délivrer un signal électrique dont le niveau est fonction de l'intensité du phénomène physique, le dispositif de lecture comportant les circuits de lecture du capteur et configuré pour mettre en oeuvre le procédé de lecture selon l'une des revendications 1 à 8, les pixels étant organisés en rangées et étant reliés au travers de conducteurs aux circuits de lecture (1) du dispositif de lecture, les circuits de lecture (1) comprenant chacun un convertisseur analogique numérique (5) recevant le signal électrique et délivrant une information numérique fonction du signal électrique.

10. Dispositif de lecture selon la revendication 9, dans lequel le convertisseur analogique numérique (5) est un convertisseur Sigma-Delta.

Col (j)                    Col (j+1)

L (i)

P (i,j)

D (i,j)                    T (i,j)

P (i,j+1)

D (i,j+1)                  T (i,j+1)

L (i+1)

P (i+1,j)

D (i+1,j)                  T (i+1,j)

P (i+1,j+1)

D (i+1,j+1)                T (i+1,j+1)

FIGURE 1

3

Etage charge=>tension

P                          4

Matrice pixel                              5

Gate

T

Ccol          CpO         ADC

Rccol

Echantillonneur-bloqueur

Etage d'entrée

2

Circuit de lecture

1

FIGURE 2

FIGURE 3

Europäisches
Patentamt

European
Patent Office

Office européen
des brevets

# RAPPORT DE RECHERCHE EUROPEENNE

**Numéro de la demande**

EP 24 15 3364

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 739 872 A1 (TELEDYNE INNOVACIONES MICROELECTRONICAS SLU [ES]) 18 novembre 2020 (2020-11-18) | 1,2,7-10 | INV. H04N25/77 H04N25/76 |
| Y | * abrégé * | 3,6 | H04N25/60 |
| A | * figures 1,2,4 * * alinéas [0002], [0010], [0023], [0031], [0057] * | 4,5 | H04N25/618 H04N25/771 H04N25/772 H04N25/65 |
| Y | FR 2 951 311 A1 (TRIXELL SAS [FR]) 15 avril 2011 (2011-04-15) | 3 | H04N25/30 H04N25/78 |
| A | * abrégé * * revendication 1 * | 1,2,4-10 | |
| Y | MOUSAZADEH MORTEZA ED - RODRÍGUEZ VÁZQUEZ ÁNGEL ET AL: "A highly linear open-loop high-speed CMOS sample-and-hold", ANALOG INTEGRATED CIRCUITS AND SIGNAL PROCESSING, SPRINGER NEW YORK LLC, US, vol. 90, no. 3, 28 décembre 2016 (2016-12-28), pages 703-710, XP036156058, ISSN: 0925-1030, DOI: 10.1007/S10470-016-0912-0 [extrait le 2016-12-28] | 6 | |
| | | | **DOMAINES TECHNIQUES RECHERCHES (IPC)** |
| A | * abrégé * * page 706, colonne de gauche, lignes 3-5 * | 1-5,7-10 | H04N |

Le présent rapport a été établi pour toutes les revendications

| Lieu de la recherche | Date d'achèvement de la recherche | Examinateur |
|---|---|---|
| Munich | 15 mai 2024 | Lauri, Lauro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 15 3364

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-05-2024

| Document brevet cité au rapport de recherche | | Date de publication | Membre(s) de la famille de brevet(s) | | Date de publication |
|---|---|---|---|---|---|
| EP 3739872 | A1 | 18-11-2020 | CN | 113841388 A | 24-12-2021 |
| | | | EP | 3739872 A1 | 18-11-2020 |
| | | | IL | 287779 A | 01-01-2022 |
| | | | JP | 7389141 B2 | 29-11-2023 |
| | | | JP | 2022534365 A | 29-07-2022 |
| | | | US | 2022217292 A1 | 07-07-2022 |
| | | | WO | 2020234143 A1 | 26-11-2020 |
| FR 2951311 | A1 | 15-04-2011 | CA | 2777080 A1 | 14-04-2011 |
| | | | CN | 102763403 A | 31-10-2012 |
| | | | EP | 2486724 A2 | 15-08-2012 |
| | | | FR | 2951311 A1 | 15-04-2011 |
| | | | JP | 6177525 B2 | 09-08-2017 |
| | | | JP | 2013507805 A | 04-03-2013 |
| | | | US | 2012314112 A1 | 13-12-2012 |
| | | | WO | 2011042204 A2 | 14-04-2011 |

EPO FORM P0460

Pour tout renseignement concernant cette annexe : voir Journal Officiel de l'Office européen des brevets, No.12/82